# EUROPEAN PATENT APPLICATION

(11) **EP 1 818 938 A1**
(43) Date of publication of application: **15.08.2007**
(21) Application number: 07250497.0
(22) Date of filing: 07.02.2007
(51) Int. Cl.: G11B 27/34, G11B 27/10, G11B 27/031, G11B 27/11, G11B 27/32, G06F 3/02, G06F 3/048, G06F 17/21

(54) **Content reproducing apparatus, content reproducing method and computer program product**

(30) Priority: 08.02.2006 JP 2006031666; 15.01.2007 JP 2007006317
(71) Applicant: Ricoh Company, Ltd., Tokyo 143-8555 (JP)
(72) Inventor: Satoh, Miki, c/o Ricoh Company, Limited, Tokyo 143-8555 (JP); Wakita, Yuki, c/o Ricoh Company, Limited, Tokyo 143-8555 (JP); Takahashi, Nozomu, c/o Ricoh Company, Limited, Tokyo 143-8555 (JP); Kunieda, Takayuki, c/o Ricoh Company, Limited, Tokyo 143-8555 (JP); Annaka, Hidekuni, c/o Ricoh Company, Limited, Tokyo 143-8555 (JP); Yoshikawa, Ayako, c/o Ricoh Company, Limited, Tokyo 143-8555 (JP)
(74) Representative: Leeming, John Gerard

(57) **Abstract**

A content reproducing apparatus includes an HDD (52) that stores therein content file data that includes plural screen image data at a scene that changes over time and plural moving image data shot at a scene corresponding to the screen image data. Moreover, a display controller (53) reproduces a content file and displays the plural screen image data and the plural moving image data on a display device in turn over time scene by scene and displays, during reproducing the content file, a page for printing in which a list of contracted images of the plural screen image data are arranged in a layout format when printing on the display device.

## Description

### CROSS-REFERENCE TO RELATED APPLICATIONS

The present document incorporates by reference the entire contents of Japanese priority documents, 2006-031666 filed in Japan on February 8, 2006 and 2007-006317 filed in Japan on January 15, 2007.

### BACKGROUND OF THE INVENTION

### 1. Field of the Invention

The present invention generally relates to a content reproducing apparatus, a content reproducing method, and a content reproducing program.

### 2. Description of the Related Art

It is general that a series of plural images that change over time and moving image data can be displayed in a Web browser. In a content reproducing apparatus that reproduces content data that includes plural screen image data such as slides at a scene that changes over time, for example, in a presentation and plural moving image data shot at a scene corresponding to screen image data, each of a series of plural screen image data and moving image data can be displayed in accordance with changing scenes (for example, Japanese Patent Application Laid-Open No. 2004-234389).

However, when an instruction of printing is given during reproducing moving images or on the way of displaying an image of a series of plural images that change over time in the conventional technology, only image data that is reproduced when receiving the instruction of printing and a frame of moving image data under reproduction at the time of receiving the instruction of printing are printed.

Therefore, it is impossible to grasp the whole contents of a series of plural images before or after reproducing. In consideration of plural screen image data for each scene that changes over time particularly in a presentation, it is desirable to grasp the whole presentation before starting a presentation or as soon as possible after starting a presentation for the purpose of grasping contents of a presentation.

### SUMMARY OF THE INVENTION

It is an object of the present invention to at least partially solve the problems in the conventional technology.

According to an aspect of the present invention, a content reproducing apparatus includes a storage unit that stores therein content data that includes plural screen image data at a scene that changes over time and plural moving image data shot at a scene corresponding to the screen image data; and a display control unit that reproduces the content data stored in the storage unit and displays the plural screen image data and the plural moving image data on a display device in turn over time scene by scene and displays, during reproducing content data, a page for printing in which a list of contracted images of the plural screen image data are arranged in a layout format when printing on the display device.

According to another aspect of the present invention, a method for reproducing content includes reading, from a storage unit, content data that includes plural screen image data at a scene that changes over time and plural moving image data shot at a scene corresponding to the screen image data for reproduction; displaying the plural screen image data and the plural moving image data in turn over time scene by scene on the display device; and displaying a page for printing in which a list of contracted images of the plural screen image data are arranged in a layout format when printing on the display device while reproducing the content data.

According to still another aspect of the present invention, a computer program product causes a computer to implement the above method.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic view for depicting a whole configuration of a content generation system that includes a content edit reproducing device according to a first embodiment of the present invention;
Fig. 2 is a block diagram of a functional configuration of a content editing part of the content edit reproducing device and an event processor of an event recording device in Fig. 1;
Fig. 3 is a schematic for explaining presentation materials;
Fig. 4 is a view for explaining an example of a content file that the content editing part generates;
Fig. 5 is a view of an internal structure of the content file;
Fig. 6 is a flowchart of a processing procedure for generating the content file in Fig. 4;
Fig. 7 is a schematic view of an example of a screen for generating contents;
Fig. 8 is a schematic view of an example of an audiovisual screen for the content file;
Fig. 9 is a flowchart of a processing procedure displaying a page for printing according to the first embodiment;
Fig. 10 is a schematic view for explaining exemplary contents of a page screen for printing;
Fig. 11 is a flowchart of a processing procedure displaying a page for printing according to a second embodiment;
Fig. 12 is a schematic view for explaining exemplary contents of a selected screen for a printing page; and
Fig. 13 is a block diagram for explaining a hardware configuration of the event recording device and the content edit reproducing device.

### DETAILED DESCRIPTION OF THE PREFERRED EMBODIMENTS

Exemplary embodiments of the present invention will be explained below in detail with reference to the accompanying drawings.

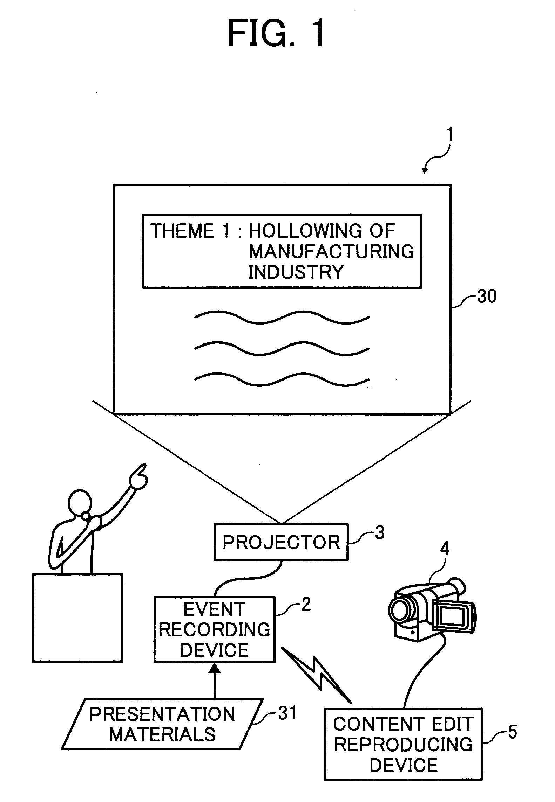

Fig. 1 is a schematic view for explaining the whole configuration of a content generation system 1 that includes a content edit reproducing device 5 according to a first embodiment of the present invention.

The content generation system 1 includes an event recording device 2 that stores presentation materials 31a and records an event of operating presentation materials, a projector 3 that is connected to the event recording device 2 and displays presentation materials 31a, a display screen 30 that displays images projected through the projector 3, a DV camera 4 that shoots a presentation status using both moving images and voice with a function of accompanying voice, and the content edit reproducing device 5 that generates, edits, and reproduces contents based on moving data that includes voice captured by the DV camera 4 (hereinafter, "moving data").

The DV camera 4 and the content edit reproducing device 5 are connected through an interface such as IEEE 1394. The event recording device 2 and the content edit reproducing device 5 are connected through a communication interface such as IEEE802.11b. A peer-to-peer network connection through normal Ethernet (registered trademark) can be available where radio communication is not established.

If the event recording device 2 that just stores presentation materials 31a can be communicated with the projector 3, any device is available, for example, a personal computer (PC) that a presenter has can be used.

An editor shoots, using the DV camera 4, how a presenter gives a presentation while showing presentation materials 31a on the display screen 30. An editor uses the content generation system 1 and edits moving images.

When shooting ends, the content edit reproducing device 5 takes presentation materials 31a from the event recording device 2, edits moving image data, and generates a content file in which moving image data is associated with presentation materials 31a. The content file can be reproduced in the content edit reproducing device 5 as well as provided in response to a request from a user.

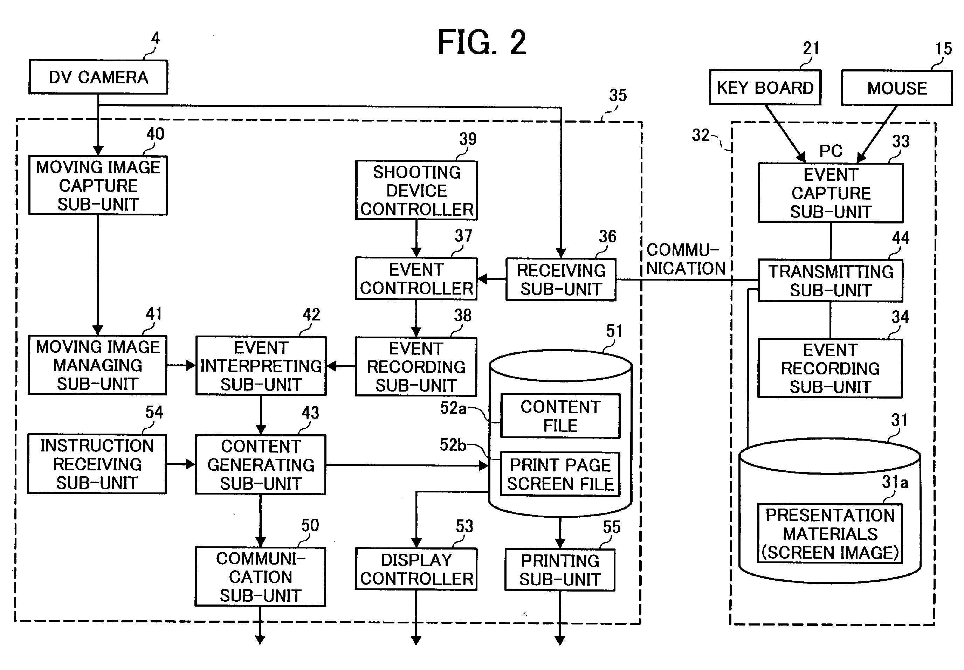

Fig. 2 is a block diagram for explaining a functional configuration of a content editing part 35 of the content edit reproducing device 5 and an event processor 32 of the event recording device 2 that perform processing characteristic to the content generation system 1 according to the first embodiment.

The event processor 32 of the event recording device 2 includes an event capture sub-unit 33 that obtains event information that represents an event about a presentation through input from a key board 21 or a mouse 15 that are connected to the event recording device 2, an event recording sub-unit 34 that records event information that the event capture sub-unit 33 obtains, and a transmitting sub-unit 44 that transmits event information and presentation materials 31a to the content edit reproducing device 5. Presentation materials 31a are stored in a storage medium such as a hard disk drive (HDD) 31.

The content editing part 35 of the content edit reproducing device 5 includes a receiving sub-unit 36 that receives event information and presentation materials 31a from the transmitting sub-unit 44, an event controller 37 that controls event information that the receiving sub-unit 36 receives, an event recording sub-unit 38 that records event information, an event interpreting sub-unit 42 that acquires event information from the event recording sub-unit 38 and interprets contents of the event information, a content generating sub-unit 43 that edits moving images based on the event information interpreted by the event interpreting sub-unit 42, generates a content file, and stores the content file in a storage medium 52 such as the HDD 31, an instruction receiving sub-unit 54 that receives an instruction from a user, a communication sub-unit 50 that transmits a content file outside in response to a user request, a moving image capture sub-unit 40 that captures moving image data shot by the DV camera 4, a moving image managing sub-unit 41 that manages moving image data, a shooting device controller 39 that controls the DV camera 4, a display controller 53 that reads a content file 52a and a print page screen file 52b from the HDD 52 and performs display control with respect to a display device (not shown), and a printing sub-unit 55 that reads the content file 52a and the print page screen file 52b from the HDD 52 and performs print processing to a printer (not shown).

In the first embodiment, the content edit reproducing device 5 generates the content file 52a and reproduces the generated content file 52a. However, the content file 52a can be transmitted to a content reproducing device of another PC and reproduced in the content reproducing device.

The content file 52a is generated by synchronizing plural screen image data such as slides at a scene that changes over time and plural moving image data captured at a scene corresponding to screen image data as event information in presentation materials 31a. In the content file 52a, plural screen image data can be sequentially displayed in synchronization with reproduction of moving image data.

The print page screen file 52b in which a list of contracted images for representing plural screen image data are arranged in a layout format when printing is data for a display screen and is displayed on the display device when printing a page for printing.

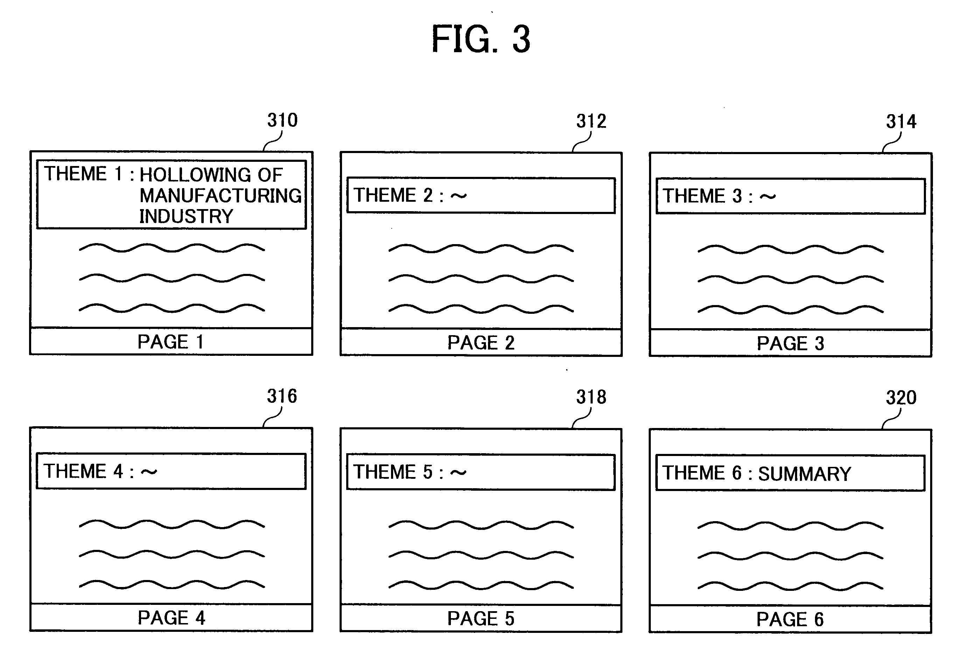

An explanation is given about presentation materials 31a shown in Fig. 3. The presentation materials 31a include screen image data 310, 312, 314, 316, 318, and 320 such as slides to be displayed on the display screen 30 when giving a presentation. The screen image data 310, 312, 314, 316, 318, and 320 is a set of slides at a scene that changes over time. A corresponding page number is given to each of screen image data 310, 312, 314, 316, 318, and 320 and the data is sequentially displayed in a page number order. In other words, the screen image data that includes presentation materials 31a is arranged in an order that is determined by a maker of the presentation materials 31a. Presentation materials 31a shown in Fig. 3 include 6 pages of screen images, which are displayed in a page order determined by an instruction of a presenter like Page 1, Page 2 .... Presentation materials 31a according to the first embodiment is a file of Power Point (registered trademark) manufactured by Microsoft (registered trademark) Corporation.

Event information is data that an event that occurs through various operations with regard to display of presentation materials 31a given by a presenter in a presentation, operation contents that the event shows, and a time that the event occurs (that is, a time when an operation is performed) are associated with one another in time sequence. A presenter typically carries out the following operations in a presentation.
1. Activation of the event recording device 2.
2. Activation of presentation software.
3. Start of presentation.
4. Turn of a page in presentation materials 31a through an operation of the key board 21 or the mouse 15.
5. End of presentation.
6. End of presentation software.
7. End of the event recording device 2.

The turn of a page means to switch from Page 1 to the following page, that is, to Page 2 of presentation materials 31a displayed on the display screen 30.

Each of the above operations is associated with a predetermined operation through the mouse 15 or the key board 21 of the event recording device 2. For example, an operation of clicking an icon of presentation software displayed on the display screen of the event recording device 2 by use of the mouse 15 is associated with an event of activating presentation software.

The event recording sub-unit 34 of the event recording device 2 records a log of the event information and the transmitting sub-unit 44 transmits it through a communication interface to the content editing part 35 of the content edit reproducing device 5.

The shooting device controller 39 of the content edit reproducing device 5 controls the DV camera 4 based on event information. The event recording sub-unit 38 records not only event information received from the event recording device 2 but also an event of controlling the DV camera 4.

For example, when an event of starting recording an event occurs and the content edit reproducing device 5 receives the information, the event information is recorded in the event recording sub-unit 34. When a slide show of presentation software ends, the event information is transmitted to the content edit reproducing device 5 and recorded therein. The shooting device controller 39 starts capturing moving image data from the DV camera 4. When the presentation software ends and the event information is received from the event recording device 2, the shooting device controller 39 of the content edit reproducing device 5 stops capturing moving image data from the DV camera 4. The event controller 37 records an event of stopping presentation software as event information to the event recording sub-unit 38.

The event interpreting sub-unit 42 interprets contents of event information. The content generating sub-unit 43 refers to contents of event information interpreted by the event interpreting sub-unit 42 and generates the content file 52a based on presentation materials 31a and moving image data.

Thus, the content editing part 35 can manage event information in moving image data captured from the DV camera 4 with moving image data. That is, moving image data shot and captured by the DV camera 4 is stored with time information for defining a change of time added. Recorded event information is merged with presentation materials 31a by the content generating sub-unit 43 and is managed by a content description language (hypertext markup language (HTML), MPEG-7, and the like).

The communication sub-unit 50 transmits provision information made up by the display controller 53 through a network outside.

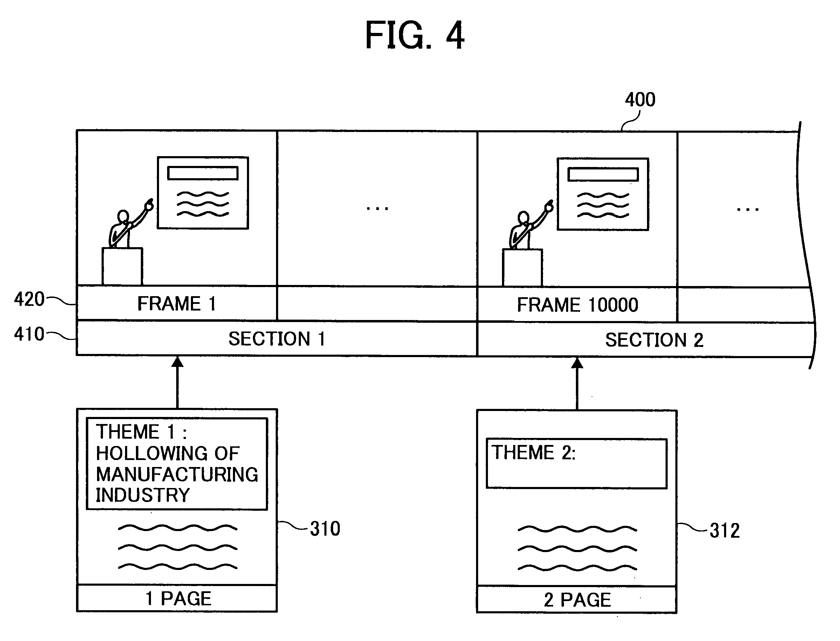

Fig. 4 is a view for explaining an example of the content file 52a that the content editing part 35 generates. The content file includes moving image data 400, plural screen image data 310, 312... corresponding to each section 410 of moving image data 400, and information of a table of contents. Each section 410 of moving image data 400 includes plural frames 420. A length of each section 410 is determined based on event information. Thus, moving image data 400 is associated with each screen image data 310, 312... of presentation materials 31a so that it is possible to synchronize moving image data 400 with each screen image data 310, 312... of presentation materials 31a to display them.

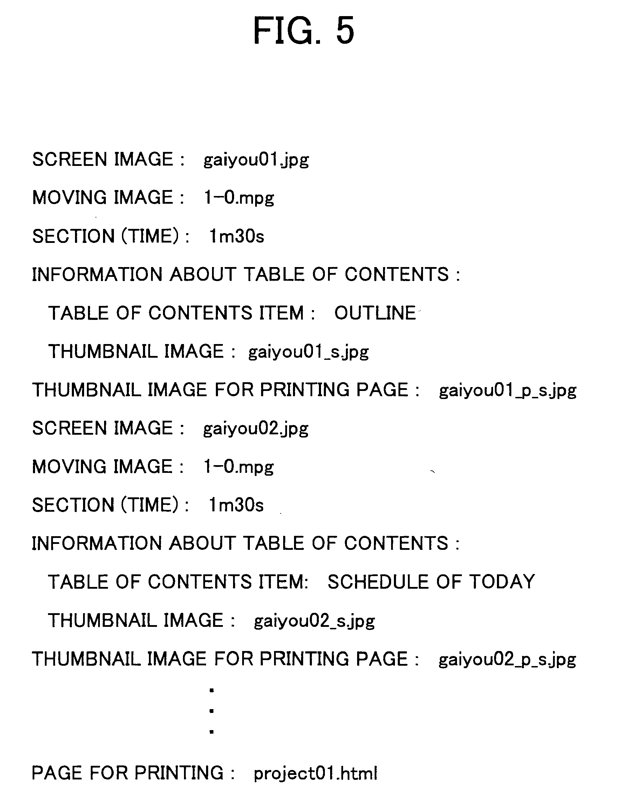

Fig. 5 is a view of an internal structure of the content file 52a. The content file 52a includes a file name of screen image data, a file name of moving image data, a section (time), information of a table of contents, and a file name of a print page thumbnail image for each screen image data, which are associated with one another. That is, the content file 52a is generated by a content description language such as HTML, MPEG-7, and the like and screen image data, a thumbnail image for a table of contents, print page image data, and a print page thumbnail image that are specified based on a file name are linked to the content file 52a and specified. A file name of the print page image screen file 52b is linked to the content file 52a.

The print page thumbnail image is a contracted image of screen image data displayed on a page for printing and is generated separately from screen image data and is generated separately from a thumbnail image that is used as a table of contents. Therefore, it is unnecessary to contract and generate screen image data whenever a print page screen is displayed, enabling processing of displaying a page for printing at high speed. In addition, it is unnecessary to contract or enlarge a thumbnail image for a table of contents, enabling enhancement of a quality of a contracted image.

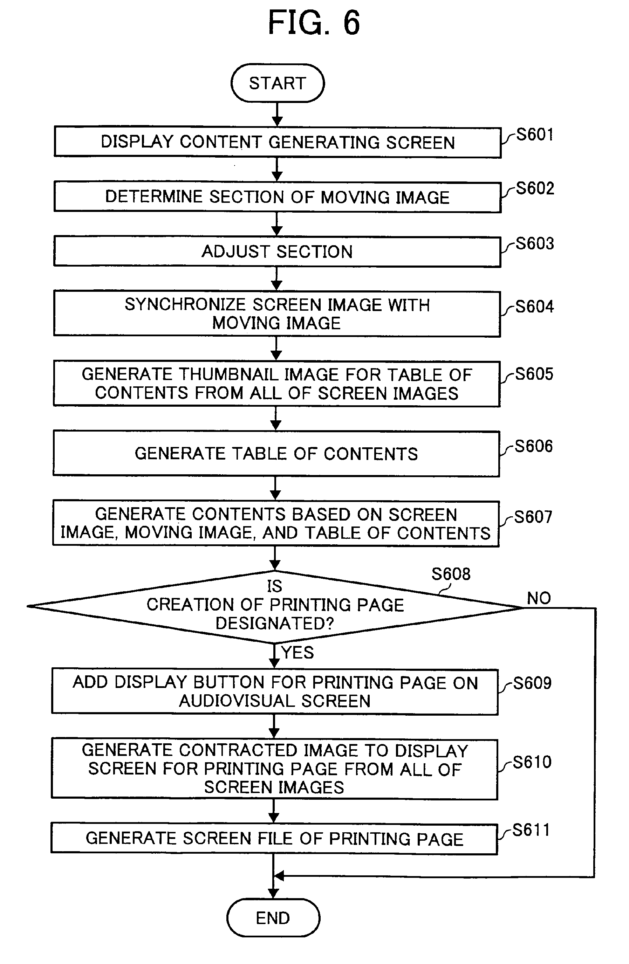

An explanation is given about processing of generating a content file constituted as described above by the content edit reproducing device according to the first embodiment. Fig. 6 is a flowchart of a processing procedure generating a content file according to the first embodiment.

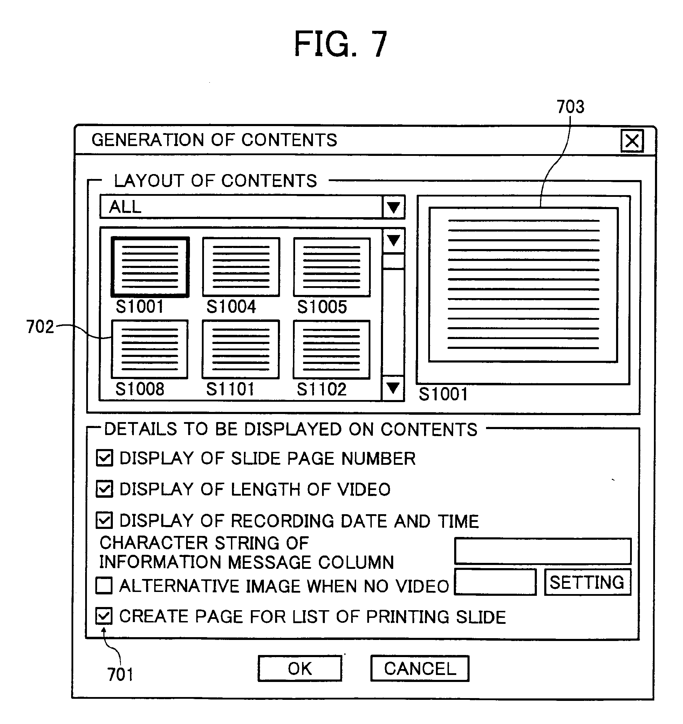

First of all, the content generating sub-unit 43 displays a screen for generating contents on the display device (step S601). Fig. 7 is a schematic view of an example of a screen for generating contents. A list of screen images 702 to set a layout of contents are displayed on the screen for generating contents and a screen image selected from the list of screen images is enlarged and displayed at a region 703. Check boxes are also displayed, on the screen for generating contents, to set details that are displayed on contents. Among check boxes, a check box 701 of "a page of a list of slides for printing" is provided to instruct whether a page for printing is generated. In other words, when the check box 701 of "a page of a list of slides for printing" is designated as "on", the content generating sub-unit 43 generates the print page screen file 52b with a contracted image of a screen image when generating the content file 52a. Then, the content file 52a is generated with a later-described display button for a print page added on an audiovisual screen that displays contents.

On the other hand, when the check box 701 of "a page of a list of slides for printing" is not designated as "on", the content generating sub-unit 43 does not generate the print page screen file 52b and a contracted image of a screen image when generating the content file 52a. Then, the content file 52a is generated without adding the display button for a print page on the audiovisual image.

Returning to Fig. 6, when an OK button is pressed on the screen for generating contents, the content generating sub-unit 43 divides moving image data obtained from the DV camera 4 into plural sections based on event information 700 obtained from the event recording device 2 and determines sections of moving image data (step S602). More specifically, when two continuously recorded event information that represent "switch to a counter value 3 and an event kind page 2" and "switch to a counter value 5 and an event kind page 3" are obtained, it is determined that a section of moving image data videotaped between 10:10 and 10:16 corresponds to Page 2. That is, moving image data is divided as a section in which positions of 10:10 and 10:16 are regarded as a border position.

The content generating sub-unit 43 adjusts a length of each determined section by comparing it with a predetermined length (step S603). When moving image data is divided into plural sections, the content generating sub-unit 43 synchronizes moving image data with a screen image of presentation materials 31a based on event information (step 5604).

The content generating sub-unit 43 generates a thumbnail image for a table of contents based on all of screen image data (step S605) and generates a table of contents (step 5606).

The content generating sub-unit 43 generates contents that include screen image data, moving image data, and a table of contents (step S607). It is determined whether a page for printing is created on the screen for generating contents, that is, whether the check box 701 of "a page of a list of slides for printing" is designated as "on" (step S608).

When creating a page for printing is designated (step S608: Yes), the display button for a print page is added to data on the audiovisual screen (step S609). A contracted image (a thumbnail image for a printing page) to display a screen for a printing page from all of screen image data is generated (step S610) and data of a page screen for printing is generated as shown in Fig. 5 (step S611).

When creating a page for printing is not designated at step S608 (step 5608: No), processing ends without adding the display button for a print page of data on the audiovisual screen, generating a contracted image (a thumbnail image for a printing page) to display a screen of a printing page, and generating data of a print page screen.

As described above, the content file 52a is generated and stored in the HDD 52. At the same time the print page screen file 52b is also stored with a thumbnail image for a printing page in the HDD 52.

When the content file 52a generated like this is reproduced, the audiovisual screen is displayed on the display device through the display controller 53.

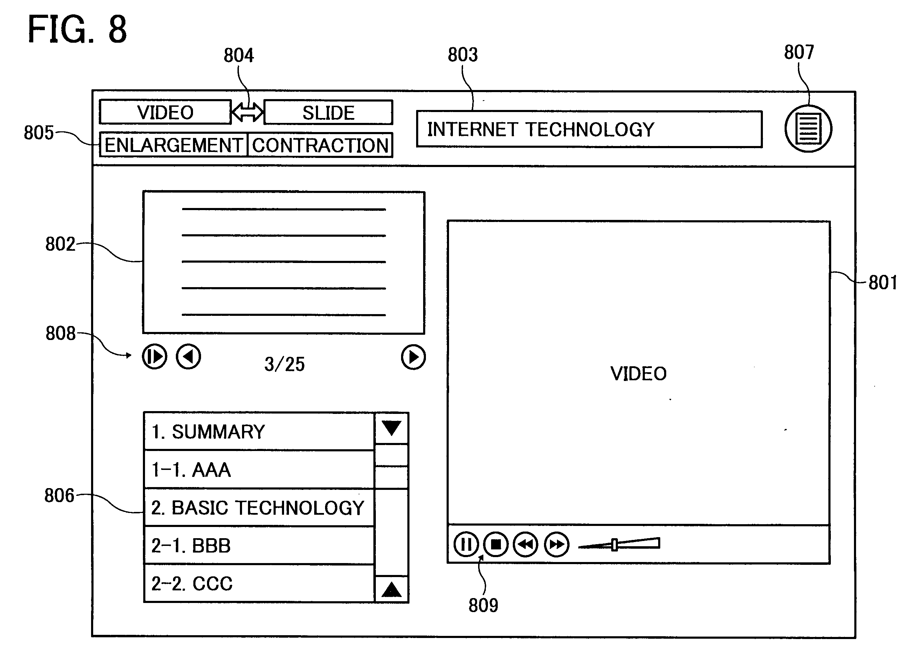

Fig. 8 is a schematic view of an example of the audiovisual screen of the content file 52a. The example shows that creating a page for printing is designated. The display button 807 for a printing page is displayed on the audiovisual screen of the content file 52a generated by designating creation of a page for printing. The audiovisual screen includes a video display region 801, a screen image display region 802, and a region for a table of contents 806. Screen image data is changed over time and is sequentially displayed in the screen image display region 802. Moving image data corresponding to screen image data of presentation materials 31a that are displayed in the screen image display region 802 is displayed in the video display region 801. Information about a table of contents of a content file 52a is displayed in the region for a table of contents 806.

Furthermore, a reproducing control button 808 for screen image data, a reproducing control button for moving image data, a content title 803, a switch button between video and a screen image (slide) 804, and a button 805 for selecting enlargement or contraction of a screen image are displayed on the audiovisual screen.

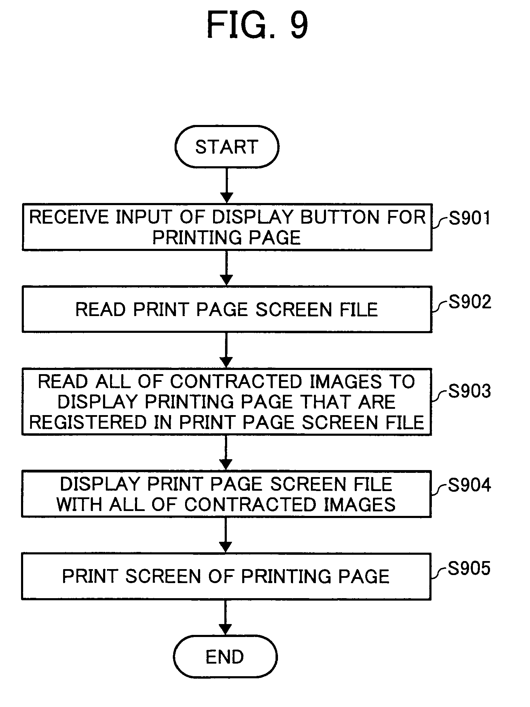

An explanation is given about processing of displaying a page for printing through the display controller 53 of the content edit reproducing device 5 according to the first embodiment. Fig. 9 is a flowchart of a processing procedure displaying a printing page according to the first embodiment. When the display button 807 for a printing page is pressed on the audiovisual screen shown in Fig. 8, the display controller 53 receives input of the display button 807 for a printing page (step S901).

The print page screen file 52b that is linked with the content file 52a is read from the HDD 52 (step S902). The display controller 53 reads all of contracted images for a printing page that are linked with the content file 52a from the HDD 52 (step S903).

Next, the display controller 53 displays, on the display device, the read print page screen file 52b together with all of read contracted images (a thumbnail image for a printing page) (step S904).

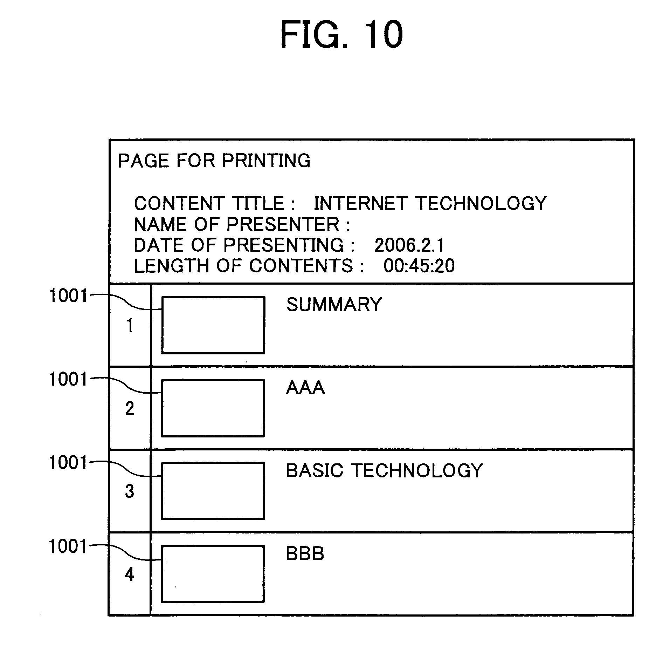

Fig.10 is a schematic view for explaining exemplary contents of a printing page screen. A content title, bibliographic information such as a name of a presenter, and contracted images 1001 for all of screen images are displayed on the screen for a printing image. A title of each screen image is displayed to the right of the contracted image. It is possible to take notes in the margin that is below a title of each screen image after printing a page for printing.

When printing a printing page screen shown in Fig. 10, printing is performed based on an operation of a predetermined printing instruction. For example, when a page screen for printing is displayed in Internet Explorer (registered trademark), an instruction of printing is given by use of printing capability of Internet Explorer. When the operation of the printing instruction is performed, a page for printing is output for printing through the printing sub-unit 55 (step S905).

As described above, in the content edit reproducing device 5 according to the first embodiment, the content file 52a is reproduced and plural screen image data and plural moving image data are sequentially displayed on the display device over time scene by scene while a printing page screen in which a list of contracted images of plural screen images are arranged in a layout format when printing is displayed, during reproducing the content file 52a, on the display device so that it is possible to easily grasp the whole contents of a series of plural screen image data even when a series of plural screen image data is sequentially displayed.

The content edit reproducing device 5 according to the first embodiment generates a single page for printing while generating the content file 52a and displays a page screen for printing while reproducing the content file 52a. However, the content edit reproducing device 5 according to a second embodiment generates plural pages for printing, makes a user select a desired page for printing while reproducing the content file 52a, and displays the selected page screen for printing.

The content edit reproducing device 5 and the event recording device 2 according to the second embodiment are the same in configuration as those in the first embodiment.

On the other hand, a structure of the content file 52a is different from that of the content file 52a in the first embodiment in that a file of printing pages is not designated to link with.

When generating the content file 52a by the content generating sub-unit 43 of the content edit reproducing device 5 according to the second embodiment, plural print page screen files 52b that have different layouts are generated and stored in the HDD 52. In this event the same thumbnail image for a printing page is displayed on plural screens for a printing page in the second embodiment. Therefore, the thumbnail image for a printing page is generated for each screen image in the same manner as in the first embodiment.

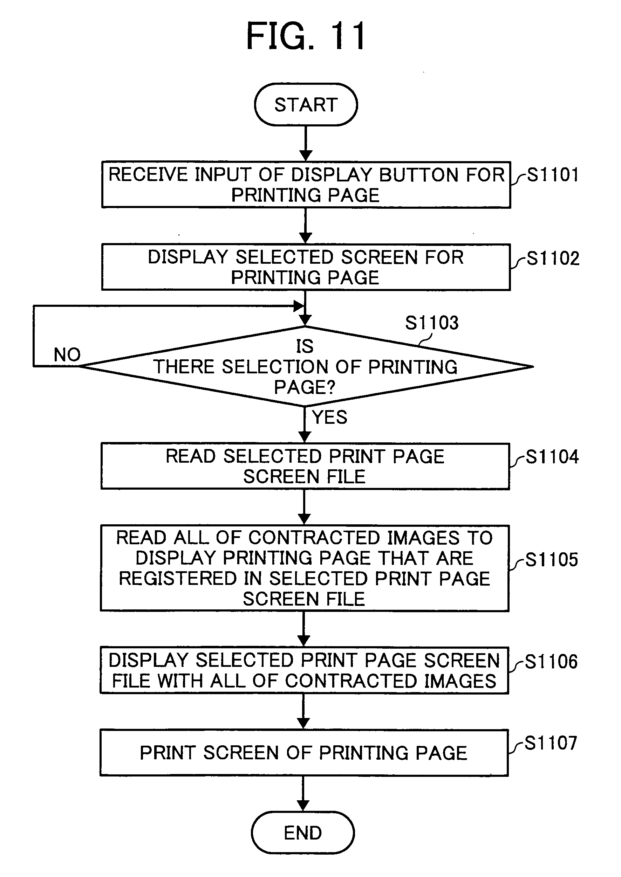

An explanation is given about processing of displaying a printing page by the display controller 53 of the content edit reproducing device 5 according to the second embodiment. Fig. 11 is a flowchart of a processing procedure displaying a printing page according to the second embodiment. When the display button 807 for a printing page is pressed on the audiovisual screen shown in Fig. 8, the display controller 53 receives input of the display button 807 for a printing page (step S1101). The display controller 53 displays a selected screen for a printing page on the display device (step S1102) while being in a state of waiting for a selection of a printing page on the selected screen for a printing page (step S1103).

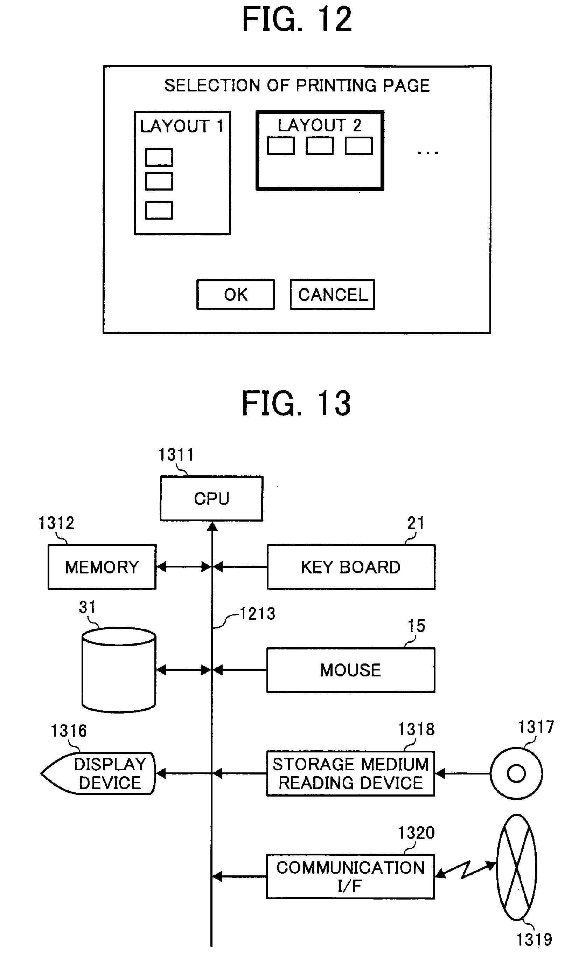

Fig. 12 is a schematic view for explaining exemplary contents of the selected screen for a printing page. A list of plural layouts for a printing page are displayed on the selected screen for a printing page and a user can select a desired layout of a printing page from this list. Fig. 12 represents a state of a layout 2 of a printing page being selected.

When receiving a selection of a printing page, the display controller 53 reads the selected print page screen file 52b from the HDD 52 (step S1104). The display controller 53 reads all of contracted images (a thumbnail image for a printing page) for a printing page that are linked with the content file 52a (step S1105) from the HDD 52.

The display controller 53 displays the read print page screen file 52b together with all of read contracted images (a thumbnail image for a printing page) on the display device (step S1106). From this time forward, the same processing is performed as processing of displaying a screen for a printing page of the first embodiment.

Thus, the content edit reproducing device 5 according to the second embodiment generates plural pages for printing, makes a user select a desired page for printing when reproducing the content file 52a, and displays the selected page screen for printing. As a result, this makes it possible to provide a user with plural layouts of print page screens as well as to display a page for printing that includes a desired layout for a user for the sake of a user's convenience.

Fig. 13 is a block diagram for explaining a hardware configuration of the event recording device 2 and the content edit reproducing device 5. In the event recording device 2 and the content edit reproducing device 5, a central processing unit (CPU) 1311 that performs various calculations and intensively controls each component is connected to a memory 1312 that includes various read-only memories (ROM) and random-access memories (RAM) through a bus 1213.

The bus 1213 includes, through a predetermined interface, a magnetic storage device 1314 such as a hard disk, the mouse 15 that is an input device, the key board 21 that is also an input device, and a display device 1316 such as a liquid crystal display (LCD). A storage medium reading device 1318 that reads a storage medium 1317 such as an optical disc can be connected to the bus. A predetermined communication interface 1320 that performs communication with a network 1319 such as the Internet can be connected to the bus. Various forms of media such as an optical disc like a compact disc (CD) and a digital versatile disc (DVD), a magneto-optical disc, and a flexible disk can be used as the storage medium 1317. An optical disc device, a magneto-optical disc device, and the like, to be concrete, can be used as the storage medium reading device 1318 based on types of storage medium 1317.

A content generation program that implements a program according to the first and second embodiments is stored in the magnetic storage device 1314 of the content edit reproducing device 5. The content generation program is installed in the magnetic storage device 1314 by reading it from the storage medium 1317 by the storage medium reading device 1318 or downloading it from the network 1319 such as the Internet. This installation makes the content edit reproducing device 5 operable. In other words, operation of CPU 1311 based on the content generation program causes capabilities of various later-described modules to implement. The content generation program can be part of certain application software or can operate on a certain operating system (OS). Predetermined presentation software is stored in the magnetic storage device 1314 of the event recording device 2.

The present invention is not limited to the above embodiments as they are and can be embodied with modified components within a range of not departing from the gist in a practical stage. Various inventions can be made based on appropriate combinations of plural components that are disclosed in the above embodiments. For example, some components can be deleted from all of components disclosed in the embodiments. A component according to a different embodiment can be properly combined.

According to an aspect of the present invention, content data is reproduced and plural screen image data and plural moving image data are sequentially displayed on the display device over time scene by scene while a page for printing in which a list of contracted images of plural screen image data are arranged in a layout format when printing is displayed, during reproducing a content data, on the display device so that it is advantageously possible to easily grasp the whole contents of a series of plural screen image data even when a series of plural screen image data is sequentially displayed.

According to the aspect of the present invention, content data is reproduced and stored in a storage unit as well as, when reproducing content data, a page for printing a contracted image are generated to store in the storage unit. Therefore, it is unnecessary to generate a contracted image whenever a page for printing is displayed, enabling processing of displaying a page for printing at high speed. It is advantageous that a contracted image can be precisely displayed in image quality because a contracted image is previously stored.

According to the aspect of the present invention, when generating content data, whether a page for printing is created is designated by a user and the designation of creating a page for printing is received, a page for printing and a contracted image are generated to store in a storage unit. Thus, a page for printing can be displayed only when a user wants to for a user's convenience.

According to the aspect of the present invention, when a reproducing screen of content data that includes print page display instruction information to give an instruction of displaying a page for printing is displayed on the display device and input of print page display instruction information from a user is received on the reproducing screen, the page for printing is displayed on the display device, enabling display of a page for printing with easy operation to advantage.

According to the aspect of the present invention, when designation of creating a page for printing is received, the reproducing screen is created with print page display instruction information added. Thus, a page for printing can be displayed only when a user wants to for a user's convenience.

According to the aspect of the present invention, selection of a page for printing that a user wants is received and the selected page for printing is displayed on the display device. Thus, a page for printing in a printing format that a user wants can be displayed for the sake of a user's convenience.

According to the aspect of the present invention, when generating content data, plural pages for printing and contracted images are generated to store in the storage unit. Thus, plural printing formats of pages for printing can be provided to a user and a user can select a page for printing that a user wants to advantage.

According to the aspect of the present invention, a page for printing has a region in which a user can write after output of printing. Thus, a user can take notes of details scene by scene for a user's convenience.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A content reproducing apparatus comprising :
a storage unit (52) that stores therein content data that includes plural screen image data at a scene that changes over time and plural moving image data shot at a scene corresponding to the screen image data; and
a display control unit (53) that reproduces the content data stored in the storage unit (52) and displays the plural screen image data and the plural moving image data on a display device in turn over time scene by scene and displays, during reproducing content data, a page for printing in which a list of contracted images of the plural screen image data are arranged in a layout format when printing on the display device.

2. The content reproducing apparatus according to claim 1, further comprising a content generating unit (43) that generates the content data to store in the storage unit (52) and, when generating the content data, generates the page for printing and the contracted image to store in the storage unit (52).

3. The content reproducing apparatus according to claim 2, wherein the content generating unit (43) makes a user designate whether the page for printing is created when generating the content data and, when receiving designation of creating the page for printing, generates the page for printing and the contracted image to store in the storage unit (52).

4. The content reproducing apparatus according to claim 3, wherein the display control unit (53) displays a reproducing image of the content data that includes print page display instruction information to give an instruction of displaying the page for printing on the display device and, when receiving input of the print page display instruction information from a user on the reproducing image, displays the page for printing on the display device.

5. The content reproducing apparatus according to claim 4, wherein the content generating unit (43) generates the reproducing screen with the print page display instruction information added when receiving designation of creating the page for printing.

6. The content reproducing apparatus according to any one of claims 2 to 5, wherein the display control unit (53) receives selection of the page for printing that a user wants and displays the selected page for printing on the display device.

7. The content reproducing apparatus according to claim 6, wherein the content generating unit (43) generates the plural pages for printing and the contracted image to store in the storage unit (52) when generating the content data.

8. The content reproducing apparatus according to any one of claims 1 to 7, wherein the page for printing has a region in which a user can write after output of printing.

9. A method for reproducing content comprising:
reading, from a storage unit (52), content data that includes plural screen image data at a scene that changes over time and plural moving image data shot at a scene corresponding to the screen image data for reproduction;
displaying the plural screen image data and the plural moving image data in turn over time scene by scene on the display device; and
displaying a page for printing in which a list of contracted images of the plural screen image data are arranged in a layout format when printing on the display device while reproducing the content data.

10. A content reproducing program product that causes a computer to execute:
reading, from a storage unit (52), content data that includes plural screen image data at a scene that changes over time and plural moving image data shot at a scene corresponding to the screen image data for reproduction;
displaying the plural screen image data and the plural moving image data in turn over time scene by scene on the display device; and
displaying a page for printing in which a list of contracted images of the plural screen image data are arranged in a layout format when printing on the display device while reproducing the content data.
